# FASCICULE DE BREVET EUROPEEN

(11) **EP 3 604 706 B1**
(45) Date de publication et mention de la délivrance du brevet: **07.06.2023**
(21) Numéro de dépôt: 19189085.4
(22) Date de dépôt: 30.07.2019
(51) Int. Cl.: E04F 11/032, B33Y 80/00, B33Y 10/00

(54) **ESCALIER RÉALISÉ PAR IMPRESSION 3D D'UN MATÉRIAU CIMENTAIRE**
TREPPE, DIE DURCH 3D-DRUCK AUS EINEM ZEMENTMATERIAL HERGESTELLT WIRD
STAIRCASE MADE BY 3D PRINTING OF A CEMENT SUBSTANCE

(30) Priorité: 30.07.2018 FR 1857101
(43) Date de publication de la demande: 05.02.2020
(73) Titulaire: VCF HABITAT IDF, 92000 Nanterre (FR)
(72) Inventeur: ARRONDEAU, Yoan, 92000 Nanterre (FR); DA COSTA, Philippe, 92000 Nanterre (FR); FONT, Emmanuelle, 92000 Nanterre (FR); TUAL, Emmanuel, 92000 Nanterre (FR); ALEXANDER, Fabrice, 92000 Nanterre (FR); DENIAU, Romuald, 92000 Nanterre (FR); GHEDIN, Olivier, 92000 Nanterre (FR); LIM, Serge, 92000 Nanterre (FR); COSTA, Christophe, 92000 Nanterre (FR); LENORMAND, Virginie, 92000 Nanterre (FR); DEMONTFAUCON, Laurent, 92000 Nanterre (FR); TEMPEZ, Thierry, 92000 Nanterre (FR); COUQUE, Pierre, 92000 Nanterre (FR)
(74) Mandataire: Cabinet Nony

(56) Documents cités:
- EP-A- 0 002 141
- FR-A1- 2 765 604
- US-A- 6 108 988
- US-A1- 2014 279 177
- US-A1- 2016 331 135
- US-A1- 2017 076 258
- US-A1- 2018 100 311

## Description

La présente invention concerne la fabrication d'escaliers et les escaliers ainsi réalisés.

L'invention s'intéresse plus particulièrement aux escaliers en colimaçon.

Un escalier en colimaçon, encore appelé escalier hélicoïdal ou escalier spirale, comporte un noyau central qui porte les marches. Ce noyau est mis en place dans une cage.

Il est connu de réaliser le noyau avec les marches sous la forme d'éléments préfabriqués en béton qui sont assemblés au fur et à mesure de la construction de l'ouvrage.

Une première façon de fabriquer l'escalier en béton consiste à réaliser en usine chaque élément sous la forme d'une marche et d'un anneau. Lors de la construction les anneaux sont empilés les uns sur les autres pour constituer le noyau central.

Une autre façon de procéder consiste à réaliser en usine également des éléments moulés représentant par exemple un quart de tour de l'escalier, qui sont déposés à leur emplacement final à l'aide d'une grue.

Ces techniques offrent des possibilités limitées en termes de design et imposent généralement des travaux de finition assez importants.

La demande de brevet FR 2 765 604 divulgue un escalier hélicoïdal selon le préambule de la revendication 1, composé de quatre éléments préfabriqués en béton moulé incluant la cage de l'escalier.

Il existe un besoin pour perfectionner encore les escaliers en colimaçon et l'invention y répond grâce à un escalier en colimaçon comportant une volée tenue par un noyau central et une cage externe, la volée et la cage étant réalisées par impression 3D en un matériau.

L'invention exploite la possibilité de réaliser des formes complexes par impression pour simplifier la fabrication de l'escalier et faciliter sa construction.

De préférence, le noyau est également réalisé par impression du matériau cimentaire.

De préférence, la cage est réalisée avec une paroi évidée intérieurement au moins par endroits. Cela permet de diminuer la quantité de matériau cimentaire utilisée et d'alléger l'escalier.

La volée peut être réalisée avec des marches au moins partiellement évidées intérieurement.

Le noyau central peut être interrompu par une ouverture accompagnant les marches et délimitant verticalement un garde-corps. On évite ainsi le coût et l'encombrement d'un garde-corps rapporté et l'on peut faciliter la circulation dans l'escalier d'objets de grandes dimensions tels qu'un brancard.

L'escalier peut avantageusement comporter une main-courante venue d'impression.

Selon l'invention, l'escalier est imprimé par tronçons et ces tronçons sont assemblés les uns avec les autres.

L'escalier peut comporter à chaque étage un décrochement s'étendant sur une partie de l'épaisseur de la paroi de la cage, pour recevoir la dalle de plancher correspondante.

L'escalier peut comporter, notamment dans sa ou ses parois, une réservation destinée à recevoir un système d'accrochage des murs et voiles bétons.

L'escalier peut comporter, notamment dans sa ou ses parois, une réservation destinée à recevoir un système électrique.

L'escalier peut comporter, notamment dans sa ou ses parois, une réservation destinée à recevoir un système de fluide ou colonne sèche.

L'escalier peut comporter, notamment dans la volée d'escalier, une réservation destinée à recevoir un système de transport de fluide ou colonne sèche.

La ou les parois de l'escalier peuvent servir de coffrage et être rempli d'un matériau.

La menuiserie, notamment le chambranle, d'au moins une porte palière peut être incorporée lors de l'impression de l'escalier.

La ou les parois de l'escalier peuvent comporter des réservations pour le coulage de poteaux structurels.

La ou les parois de l'escalier peuvent comporter des réservations pour l'incorporation de ferraillage.

L'escalier peut être réalisé classiquement avec un axe vertical. En variante, on profite de la possibilité de réaliser des formes complexes par impression pour donner à l'escalier une forme s'étendant selon un axe courbe.

Une cage d'ascenseur peut être imprimée en même temps que l'escalier.

Une gaine technique peut être imprimée en même temps que l'escalier.

La cage d'ascenseur et la gaine technique peuvent être imprimée en même temps.

L'invention a encore pour objet un tronçon d'escalier pour la réalisation d'un escalier tel que défini ci-dessus.

L'invention a encore pour objet un bâtiment comportant un escalier selon l'invention, tel que défini ci-dessus.

L'invention a encore pour objet un procédé de fabrication d'un escalier tel que défini ci-dessus, comportant l'étape consistant à imprimer l'escalier avec un matériau cimentaire. L'escalier est imprimé par tronçons destinés à être assemblés. L'escalier peut être imprimé sur site voire *in situ.* L'escalier peut être imprimé en même temps que la cage d'ascenseur.

L'invention pourra être mieux comprise à la lecture de la description détaillée qui va suivre, d'exemples de mise en oeuvre non limitatifs de celle-ci, et à l'examen du dessin annexé sur lequel :
- Les figures 1A et 1B représentent de façon schématique un exemple de tronçon d'escalier conforme à l'invention,
- La figure 2 est une vue analogue aux figures 1A et 1B d'une variante de réalisation,
- La figure 3 illustre l'assemblage des tronçons,
- La figure 4 est une coupe partielle représentant une variante de main-courante,
- La figure 5 est une vue de dessus d'une variante de tronçon,
- La figure 6 est une coupe partielle et schématique selon un plan radial,
- La figure 7 est une coupe illustrant la réalisation des marches avec un rez-de-marche venu d'impression et,
- La figure 8 représente de façon schématique un noyau formant garde-corps.

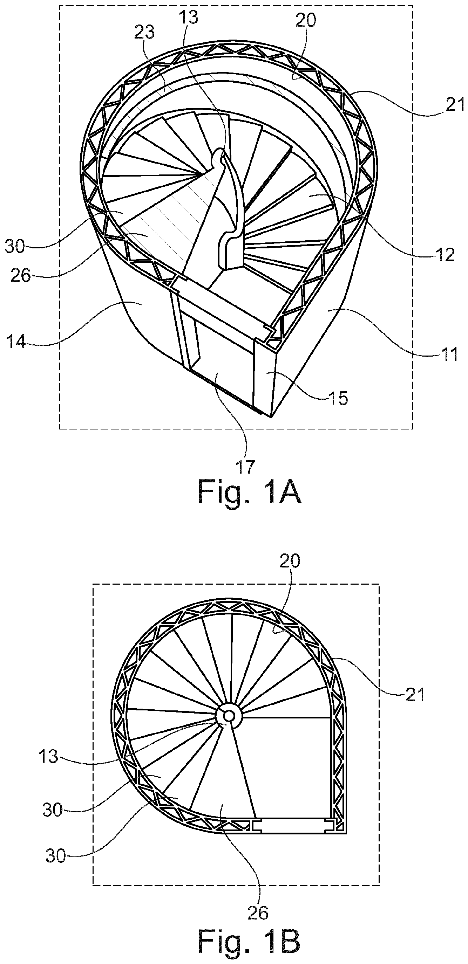

Le tronçon d'escalier hélicoïdal 10 représenté aux figure 1A et 1B comporte une cage 11 à l'intérieur duquel s'étend une volée 12 reposant en son centre sur un noyau 13 plein.

L'ensemble est réalisé conformément à l'invention par impression de matériau.

Divers dispositifs d'impression de béton sont proposés aujourd'hui permettant de réaliser le tronçon 10. Ces dispositifs comportent une tête munie d'une buse par laquelle le matériau cimentaire est extrudé, la tête étant portée par un bras robotisé permettant de la déplacer dans les trois dimensions, le pilotage des déplacements s'effectuant en fonction de la structure à réaliser.

Le matériau est choisi pour sa compatibilité avec le processus d'impression.

La fabrication des tronçons 10 peut avoir lieu dans un atelier extérieur au chantier de construction ou sur le chantier lui-même, voire *in situ.* Dans ce cas, le dispositif qui sert à l'impression s'accroche par exemple sur le tronçon du dessous venant d'être réalisé et/ou sur une colonne traversant par exemple le noyau.

Le matériau utilisé peut être un béton conventionnel, un BHP, un BFUHP, ou autre.

La cage 11, la volée 12 et le noyau 13 peuvent être réalisés sans armature métallique.

La cage 11 peut comporter une paroi courbe 14 qui décrit sensiblement, en vue de dessus, trois quarts de cercle, et qui est refermé par une paroi 15 formant un angle droit, dans lequel est réalisée l'ouverture 17 pour la porte palière.

Les parois 14 et 15 peuvent être réalisées, comme illustré, avec une structure creuse à double paroi 20, 21, ce qui permet d'alléger l'escalier.

La paroi la plus extérieure 21 peut s'étendre sur une hauteur inférieure à celle de la paroi intérieure 20, de façon à permettre un emboitement de cette dernière dans l'ouverture correspondante de la dalle de plancher.

La paroi intérieure 20 peut être imprimée avec une main courante 23, comme illustré.

Une fois imprimées, la ou les parois de l'escalier peuvent avantageusement servir de coffrage et être ainsi rempli d'un matériau. Le coffrage constitué des parois de l'escalier peut être complété par d'autres éléments de coffrage.

Un palier 26 peut être imprimé avec les marches 30 de la volée 12.

En variante, le tronçon d'escalier 10 peut être réalisé avec une paroi pleine au lieu de la paroi double 20, 21.

On peut donner à la cage 11 une forme extérieure autre qu'illustrée aux figures 1A et 1B.

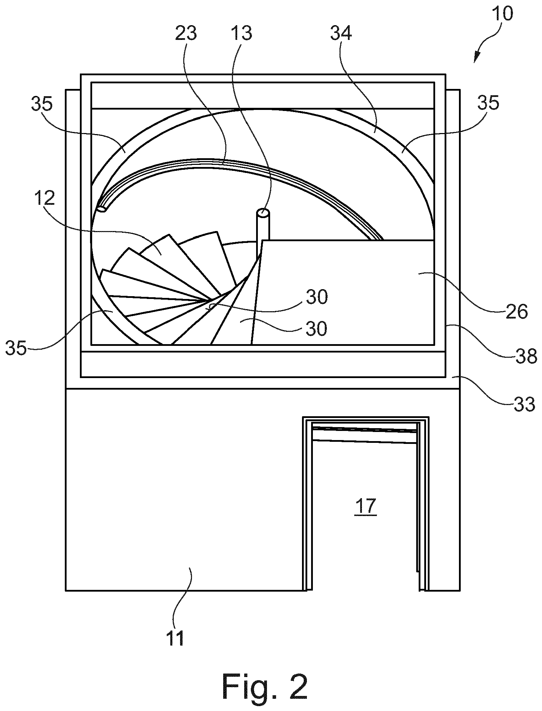

A titre d'exemple, on a représenté à la figure 2 une variante de tronçon 10 dans laquelle la cage 11 comporte une paroi extérieure 33 de section par exemple de forme carrée en vue de dessus, et une paroi intérieure 34 de section circulaire, épousant la courbure de la volée 12 et comportant des secteurs 35 disposés dans les coins de la cage 11, à l'exception de celui comportant l'ouverture 17.

Un décrochement 38 est formé dans l'épaisseur de la paroi 33 de façon à permettre un emboitement dans une ouverture correspondante de la dalle de plancher, à l'instar de l'exemple de la figure 1A.

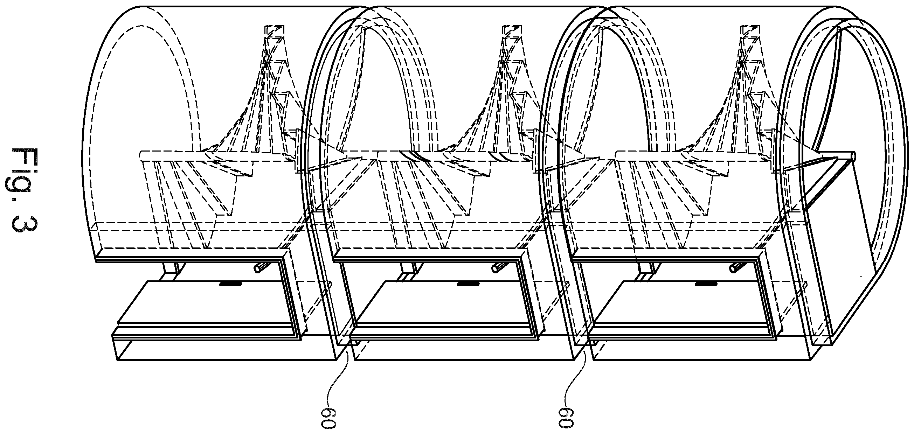

La figure 3 illustre la formation de l'escalier complet par superposition des tronçons préfabriqués 10 d'une variante de la figure 1A dans laquelle la cage est formée par une paroi pleine. On voit qu'entre les tronçons il existe une gorge 60 pour accueillir l'épaisseur de la dalle de plancher.

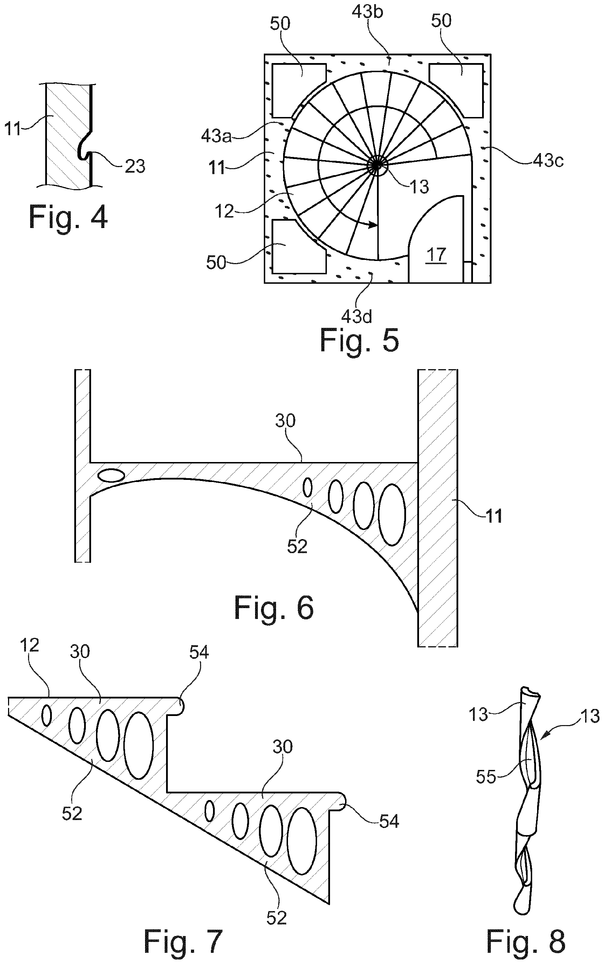

La main courante 23 peut être réalisée non plus en saillie mais sous la forme d'un renfoncement dans la paroi de la cage 11, comme illustré à la figure 4.

Dans la variante illustrée à la figure 5, la cage 11 est réalisée avec des parties pleines 43a à 43d.

Les parties pleines 43a et 43b s'étendent dans la région médiane des côtés de la cage situés à l'opposé de l'angle comportant l'ouverture palière 17.

Les parties pleines 43c et 43d se rejoignent dans l'angle comportant l'ouverture palière 17.

Dans les trois angles opposés à l'ouverture palière 17, la paroi de la cage 11 peut être évidée, comme illustré, de façon à l'alléger et définir des passages 50 pour des réseaux, par exemple d'eau, de gaz, de téléphonie et/ou d'électricité.

On peut réaliser les marches 30 avec une voûte 52, comme illustré à la figure 6. Cette voûte 52 peut être asymétrique, et présenter une hauteur, au niveau du raccordement à la cage 11, qui est supérieure à celle au niveau du raccordement au noyau 13.

La voûte 52 peut être évidée intérieurement, comme illustré, pour l'alléger.

Les marches 30 sont de préférence imprimées avec un nez de marche 54, comme illustré à la figure 7.

On peut donner au noyau 13 diverses formes.

Le noyau 13 peut ne pas être plein mais creux.

On peut disposer dans l'évidement du noyau 13 un éclairage, par exemple une lampe ou un guide de lumière où la lumière du jour est injectée par un concentrateur de lumière.

On peut encore le réaliser creux, avec un ajour 55 hélicoïdal par portions, comme illustré à la figure 8, suivant la volée 12, comportant des portions droites à l'arrivée sur le palier. La partie non ajourée d'un tel noyau 13 constitue un garde-corps.

L'invention n'est pas limitée aux exemples qui viennent d'être décrits.

On peut par exemple réaliser l'escalier de manière à ce que son axe, c'est-à-dire l'axe longitudinal du noyau 13, ne soit pas vertical mais courbe, ce qui peut être intéressant pour des superstructures où les derniers étages sont en retrait.

On peut réaliser la cage 11, le noyau 13 ou la volée 12 au moins partiellement en béton lumineux, et la cage 11 peut être ajourée ailleurs qu'au niveau de l'ouverture palière 17.

On peut réaliser les marches 30 de telle sorte que leur nez, en vue de dessus, ne soit pas rectiligne orienté radialement, mais courbe. Cela offre des possibilités accrues sur le plan esthétique et peut également rendre l'escalier plus agréable à parcourir en donnant aux marches une forme plus adaptée à la foulée d'une personne gravissant l'escalier.

On peut encore réaliser par impression une plinthe le long des marches.

La forme de la volée 12 de l'escalier peut être autre que circulaire. Par exemple, elle est elliptique ou polygonale. Il en est de même de la cage 11.

On peut par exemple réaliser dans la ou les parois de l'escalier, des réservations par exemple destinées à recevoir un système d'accrochage des murs et voiles bétons, à recevoir un système électrique, ou encore à recevoir un système de fluide ou colonne sèche.

On peut également réaliser dans la volée, une réservation destinée à recevoir un système de transport de fluide ou colonne sèche.

On peut encore réaliser des réservations dans la ou les parois de l'escalier pour le coulage de poteaux structurels ou pour l'incorporation de ferraillage, notamment des armatures de précontrainte ou post-contrainte.

On peut également incorporer lors de l'impression de l'escalier le chambranle d'une ou de plusieurs portes palières.

On peut encore imprimer une cage d'ascenseur en même temps que l'escalier.

On peut également imprimer en même temps que l'escalier une gaine technique. Cette gaine peut par exemple servir de conduit d'alimentation ou d'évacuation d'eau froide ou chaude ou de colonne de ventilation ou de climatisation. La gaine peut également servir de fourreau pour d'un réseau électrique.

## Revendications

1. Escalier en colimaçon comportant des marches (30) tenues par un noyau central (13) et une cage externe, **caractérisé par le fait que** l'escalier en colimaçon est imprimé par tronçons (10), chaque tronçon comportant une volée (12) de marches (30) et une cage externe (11) réalisées par impression 3D en un matériau, et ces tronçons (10) étant assemblés les uns avec les autres, les tronçons étant de section complète autour de l'axe longitudinal de l'escalier.

2. Escalier selon la revendication 1, la cage externe (11) étant réalisée avec une paroi (20, 21) évidée intérieurement au moins par endroits, pour définir des passages (50) pour des réseaux, par exemple d'eau, de gaz, de téléphonie et/ou d'électricité.

3. Escalier selon la revendication 1, la volée (12) étant réalisée avec des marches (30) au moins partiellement évidées intérieurement.

4. Escalier selon l'une quelconque des revendications précédentes, le noyau central (13) étant interrompu par une ouverture (55) accompagnant les marches (30) et délimitant verticalement un garde-corps.

5. Escalier selon l'une quelconque des revendications précédentes, comportant une main-courante (23) obtenue par impression 3D.

6. Escalier selon l'une quelconque des revendications précédentes, les tronçons (10) correspondant chacun à un étage.

7. Escalier selon l'une quelconque des revendications précédentes, comportant à chaque étage un décrochement (38) s'étendant sur une partie de l'épaisseur de la paroi de la cage externe (11) pour recevoir une dalle de plancher correspondante.

8. Escalier selon l'une quelconque des revendications précédentes, la paroi de la cage externe (11) comportant des réservations pour le coulage de poteaux structurels.

9. Escalier selon l'une quelconque des revendications 1 à 7, ayant un axe courbe.

10. Tronçon (10) d'escalier en colimaçon pour la réalisation d'un escalier en colimaçon tel que défini à l'une quelconque des revendications précédentes, ledit tronçon (10) comportant une volée (12) de marches (30) tenue par un noyau central (13) et une cage externe (11),
**caractérisé en ce que**
ladite (12) volée et ladite cage externe (11) sont réalisées par impression 3D en un matériau;
le tronçon (10) est imprimé;
le tronçon (10) est apte à être assemblé avec d'autres tronçons (10) de ce type pour former ledit escalier en colimaçon;
le tronçon (10) est de section complète autour de l'axe longitudinal de l'escalier; et
le tronçon (10) correspond à un étage.

11. Bâtiment comportant un escalier tel que défini dans l'une quelconque des revendications 1 à 9.

12. Procédé de fabrication d'un escalier tel que défini dans l'une quelconque des revendications 1 à 9, comportant l'étape consistant à imprimer l'escalier avec un matériau, l'escalier étant imprimé par tronçons (10) destinés à être assemblés.

13. Procédé selon la revendication 12, les tronçons (10) correspondant chacun à un étage.

14. Procédé selon la revendication 13, l'escalier étant imprimé sur site.

15. Procédé selon l'une quelconque des revendications 12 à 14, l'escalier étant imprimé en même temps qu'une cage d'ascenseur.

## Patentansprüche

1. Spindeltreppe, die Stufen (30), die durch eine Mittelspindel (13) gehalten werden, und einen Außenkäfig umfasst, **dadurch gekennzeichnet, dass** die Spindeltreppe in Abschnitten (10) gedruckt wird, wobei jeder Abschnitt einen Treppenlauf (12) mit Stufen (30) und einen Außenkäfig (11) umfasst, die durch 3D-Druck aus einem Material hergestellt werden, und wobei diese Abschnitte (10) zusammengefügt werden, wobei die Abschnitte um die Längsachse der Treppe herum einen kompletten Querschnitt aufweisen.

2. Treppe nach Anspruch 1, wobei der Außenkäfig (11) mit einer Wand (20, 21) hergestellt ist, die innen mindestens stellenweise hohl ist, um Durchgänge (50) für Netzwerke, beispielsweise für Wasser, Gas, Telefonie und/oder Strom, zu definieren.

3. Treppe nach Anspruch 1, wobei der Treppenlauf (12) mit Stufen (30) hergestellt ist, die innen mindestens teilweise hohl sind.

4. Treppe nach einem beliebigen der vorhergehenden Ansprüche, wobei die Mittelspindel (13) durch eine Öffnung (55) unterbrochen ist, die den Stufen (30) folgt und vertikal ein Geländer begrenzt.

5. Treppe nach einem beliebigen der vorhergehenden Ansprüche, die einen Handlauf (23) umfasst, der durch 3D-Druck erhalten wird.

6. Treppe nach einem beliebigen der vorhergehenden Ansprüche, wobei die Abschnitte (10) jeweils einer Etage entsprechen.

7. Treppe nach einem beliebigen der vorhergehenden Ansprüche, die auf jeder Etage einen Rücksprung (38) umfasst, der sich über einen Teil der Dicke der Wand des Außenkäfigs (11) erstreckt, um eine entsprechende Bodenplatte aufzunehmen.

8. Treppe nach einem beliebigen der vorhergehenden Ansprüche, wobei die Wand des Außenkäfigs (11) Aussparungen für das Vergießen von Konstruktionsstützen umfasst.

9. Treppe nach einem beliebigen der Ansprüche 1 bis 7, die eine gekrümmte Achse aufweist.

10. Abschnitt (10) einer Spindeltreppe für die Herstellung einer Spindeltreppe wie in einem beliebigen der vorhergehenden Ansprüche definiert, wobei der Abschnitt (10) einen Treppenlauf (12) mit Stufen (30), der durch eine Mittelspindel (13) gehalten wird, und einen Außenkäfig (11) umfasst,
**dadurch gekennzeichnet, dass**
der Treppenlauf (12) und der Außenkäfig (11) durch 3D-Druck aus einem Material hergestellt werden;
der Abschnitt (10) gedruckt wird;
der Abschnitt (10) dazu fähig ist, mit anderen Abschnitten (10) dieses Typs zusammengefügt zu werden, um die Spindeltreppe zu bilden;
der Abschnitt (10) um die Längsachse der Treppe herum einen kompletten Querschnitt aufweist; und
der Abschnitt (10) einer Etage entspricht.

11. Gebäude, das eine Treppe wie in einem beliebigen der Ansprüche 1 bis 9 definiert umfasst.

12. Verfahren zur Fertigung einer Treppe wie in einem beliebigen der Ansprüche 1 bis 9 definiert, das den Schritt umfasst, der darin besteht, die Treppe mit einem Material zu drucken, wobei die Treppe in Abschnitten (10) gedruckt wird, die dazu bestimmt sind, zusammengefügt zu werden.

13. Verfahren nach Anspruch 12, wobei die Abschnitte (10) jeweils einer Etage entsprechen.

14. Verfahren nach Anspruch 13, wobei die Treppe vor Ort gedruckt wird.

15. Verfahren nach einem beliebigen der Ansprüche 12 bis 14, wobei die Treppe gleichzeitig mit einem Fahrstuhlschacht gedruckt wird.

## Claims

1. Spiral staircase including steps (30) held by a central core (13) and an external stairwell, **characterized in that** the spiral staircase is printed in sections (10), each section including a flight (12) of steps (30) and an external stairwell (11) which are produced by 3D printing from a material, and these sections (10) being assembled with one another, the sections being of complete section around the longitudinal axis of the staircase.

2. Staircase according to Claim 1, the external stairwell (11) being produced with a wall (20, 21) hollowed internally at least in places, in order to define passages (50) for networks, for example water, gas, telephone and/or electricity networks.

3. Staircase according to Claim 1, the flight (12) being produced with steps (30) at least partially hollowed internally.

4. Staircase according to any one of the preceding claims, the central core (13) being interrupted by an opening (55) accompanying the steps (30) and vertically marking out a stair railing.

5. Staircase according to any one of the preceding claims, including a handrail (23) obtained by 3D printing.

6. Staircase according to any one of the preceding claims, the sections (10) each corresponding to a storey.

7. Staircase according to any one of the preceding claims, including, at each storey, a setback (38) extending over some of the thickness of the wall of the external stairwell (11) in order to receive a corresponding floor slab.

8. Staircase according to any one of the preceding claims, the wall of the external stairwell (11) including reservations for the casting of structural posts.

9. Staircase according to any one of Claims 1 to 7, having a curved axis.

10. Spiral staircase section (10) for producing a spiral staircase as defined in any one of the preceding claims, said section (10) including a flight (12) of steps (30) held by a central core (13) and an external stairwell (11),
**characterized in that**
said flight (12) and said external stairwell (11) are produced by 3D printing from a material;
the section (10) is printed;
the section (10) is able to be assembled with other sections (10) of this type to form said spiral staircase; the section (10) is of complete section around the longitudinal axis of the staircase; and
the section (10) corresponds to a storey.

11. Building including a staircase as defined in any one of Claims 1 to 9.

12. Method of manufacturing a staircase as defined in any one of Claims 1 to 9, including the step consisting in printing the staircase using a material, the staircase being printed in sections (10) intended to be assembled.

13. Method according to Claim 12, the sections (10) each corresponding to a storey.

14. Method according to Claim 13, the staircase being printed on site.

15. Method according to any one of Claims 12 to 14, the staircase being printed at the same time as an elevator cage.
